# EUROPEAN PATENT SPECIFICATION

(11) **EP 0 842 816 B1**
(45) Date of publication and mention of the grant of the patent: **18.12.2002**
(21) Application number: 97850141.9
(22) Date of filing: 20.10.1997
(51) Int. Cl.: B60P 7/08

(54) **Device for tensioning a fastening**
Spanneinrichtung für eine Befestigungsvorrichtung
Tendeur pour dispositif de fixation

(30) Priority: 21.10.1996 SE 9603852
(43) Date of publication of application: 20.05.1998
(73) Proprietor: JONSSON & PAULSSON INDUSTRI AKTIEBOLAG, 831 52 Östersund (SE)
(72) Inventor: Jönsson, Per-Anders, 830 43 As (SE)
(74) Representative: Rostovanyi, Peter

(56) References cited:
- GB-A- 2 128 574
- US-A- 1 403 712
- US-A- 2 946 563
- US-A- 3 077 791
- US-A- 3 279 759
- US-A- 3 458 215

## Description

### FIELD OF THE INVENTION

The present invention relates to a device for tensioning a fastening according to the preamble to claim 1 in the appended claims.

### BACKGROUND ART

For holding a load on a vehicle, use is made of some kind of fastening, such as a tightening strap or a chain, which is laid across the load and tensioned with a certain amount of force. In certain transports, above all of forestry products, such as timber and pulp wood, pipes and the like, there is the problem of the load settling, which makes it necessary to increase the tension of fastening.

Tensioning devices with automatic increase of the tension are available on the market. In most cases, they are provided with hydraulic or pneumatic means for increasing the tension, such as the tensioning devices according to SE-437,495, SE-413,182 and SE-438,126. These devices suffer from the obvious drawback that they can be used merely on vehicles having hydraulic or pneumatic systems, unless special compressors or hydraulic pumps are arranged, which involves great additional expenses.

However, tensioning devices with mechanical, automatic increase of the tension are available, which thus do not suffer from the above-mentioned drawback and which besides become more reliable in service than the above-mentioned devices. Such tensioning devices are disclosed in e.g. US-2,946,563 and US-3,077,791. These devices are composed as follows. A manually operable tensioning means is connected to a retensioning means, which in turn is connected to a strap drum. The tensioning means comprises a handle which is operated to rotate the strap drum for rolling up and tensioning the strap which extends round the load. The retensioning means comprises a helical spring. The helical spring is coaxial with the longitudinal axis of the drum. The tensioning means is connected to one end of the spring and the drum to the other end thereof. When the handle is operated and the slack in the strap has been taken up, the helical spring is tensioned and in turn rotates the drum. When the load changes during transport such that the strap slackens, the spring turns the drum such that the strap is tensioned.

This composition of the tensioning device makes it difficult to dimension the helical spring. Since the force tensioning the strap is supplied from the handle via the helical spring to the drum, the spring must be thick to withstand the strain because the strap is to be tensioned with great force in order to hold timber and other types of heavy load in place. At the same time it is desirable to have a fairly great retensioning length, which requires many turns of the spring. Consequently this prior-art composition necessitates a helical spring which both has many turns and is thick. It is desirable, however, that the spring does not need too much space, which will be the case if these requirements are to be satisfied completely. The described prior-art devices are both compromises, which above all have too small a retensioning length. The device according to US-3,077,791 besides is not sufficiently strong.

### SUMMARY OF THE INVENTION

The object of the invention therefore is to provide a tensioning device with automatic, mechanical increase of tension, which is strong, has a great retensioning length and sufficient retensioning force.

The object is achieved by means of a device according to the invention as defined in the characterising portion of claim 1. Preferred embodiments of the invention are defined in the subclaims.

### BRIEF DESCRIPTION OF THE DRAWINGS

The invention will now be described in more detail with reference to the accompanying drawings, in which
Fig. 1 is a top plan view of an embodiment of the device according to the invention;
Fig. 2 is a side view of the embodiment in Fig. 1, certain parts being broken away;
Fig. 3 is a sectional view along line A-A in Fig. 2; and
Fig. 4 is a sectional view along line B-B in Fig. 2.

### DETAILED DESCRIPTION OF A PREFERRED EMBODIMENT OF THE DEVICE ACCORDING TO THE INVENTION

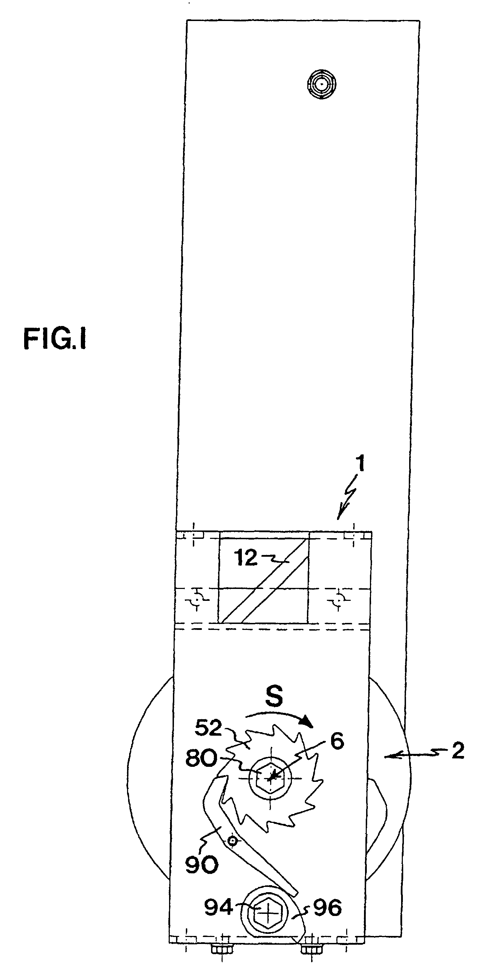

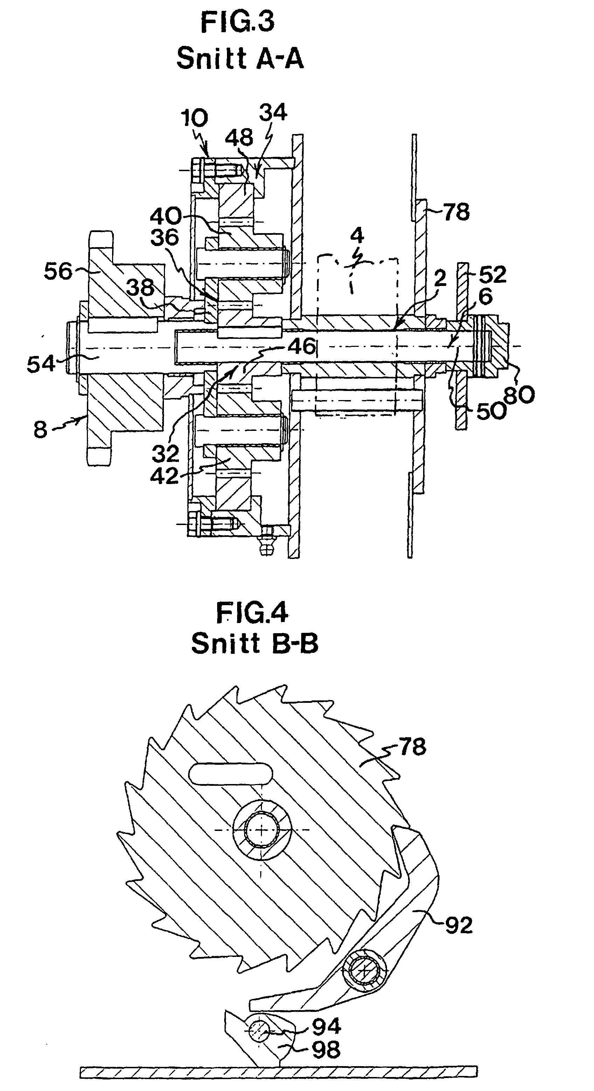

Fig. 1 shows an embodiment of an inventive device for automatic tensioning of a fastening. The device will below be referred to as tensioning device. The tensioning device comprises a frame 1, which supports the construction, a fastening drum 2 for receiving a fastening 4, which in this embodiment is a strap 4 fixed in the fastening drum 4 (Fig. 3). The fastening drum 2 is therefore referred to as strap drum 2. The tensioning device further comprises a tensioning means 6 for manual tensioning of the strap 4, and a retensioning means 8 for automatic increase of the tension of the strap 4. The strap drum 2, the tensioning means 6 and the retensioning means 8 are interconnected via a common coupling means 10, the tensioning means 6 and the retensioning means 8 each being adapted to separately rotate the strap drum 2 about its axis in a direction of tension for winding the strap 4 onto the drum 2.

As is evident from Fig. 3, the coupling means 10 comprises first, second and third transmission means 32, 34, 36. The first transmission means 32 is connected to the tensioning means 6. The second transmission means 34 is connected to the strap drum 2. The third transmission means 36 is connected to the retensioning means 8. The transmission means 32, 34, 36 constitute a planetary gear, or differential, the third transmission means 36 comprising a planet carrier 38 with two opposed planet wheels 40, 42, which are rotatably connected to the planet carrier 38. The first transmission means 32 comprises a gear wheel 46 meshing with the two planet wheels 40, 42 and arranged concentrically in relation thereto. The planet wheels 40, 42 thus rotate along the circumference of the gear wheel 46.

The second transmission means 34 comprises a gear ring 48 meshing with the two planet wheels 40, 42 and arranged concentrically in relation thereto. Thus the gear rim 48 rotates externally of the planet wheels 40, 42.

The gear wheel 46 is fixedly connected to a first transmission shaft 50 included in the first transmission means 32. Moreover, a first locking wheel 52 is fixedly arranged on the first transmission shaft 50 at the one outer end thereof. The planet carrier 38 is fixedly connected to a second transmission shaft 54 included in the third transmission means 36 at one inner end of the transmission shaft 54. A first sprocket 56 included in the retensioning means 8 is fixedly connected to the second transmission shaft 54 at the other outer end thereof. Further the second transmission shaft 54 is rotatably connected to or supported at the other inner end of the first transmission shaft 50.

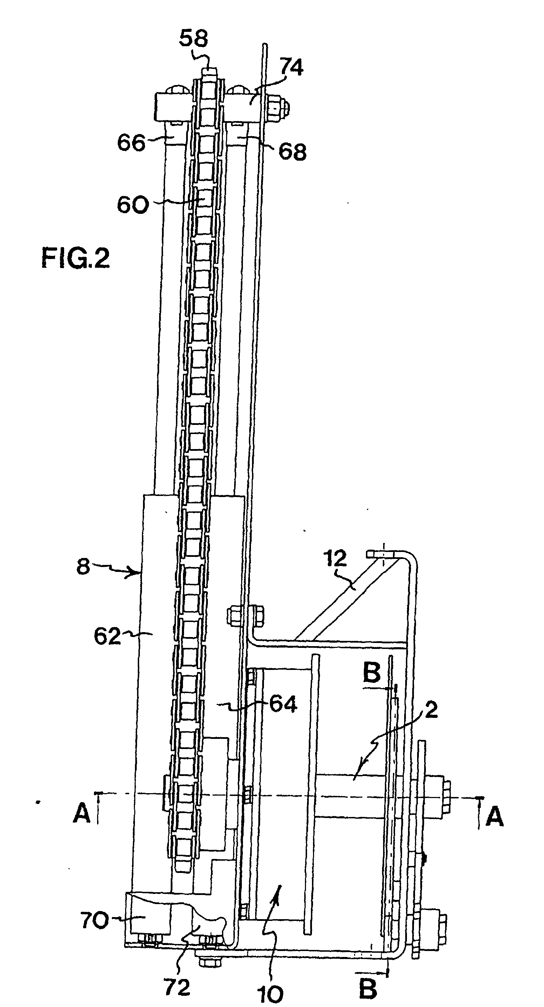

As is best seen from Fig. 2, the retensioning means 8 further comprises a second sprocket 58, a chain 60 passing over the sprockets 56, 58, and a power-storing means in the form of two gas-operated springs 62, 64. The one ends 66, 68 of the gas-operated springs 62, 64 are connected to the chain 60 and their other ends 70, 72 are fixed in the frame 1.

The strap drum 2 is rotatably connected to, i.e. supported by, the first transmission shaft 50 between the first locking wheel 52 and the gear wheel 46.

A second locking wheel 78 is included in the strap drum 2.

The tensioning means 6 comprises, in addition to said first locking means 52, a lever seat 80, which is arranged in the outer end of the first transmission shaft 50 and which has a hexagonal projection for engaging a lever, for instance a box key.

The embodiment of the invention as described above functions as follows. In order to tension the strap 4, the lever seat 80 is rotated by means of the lever, whereby the first transmission means, i.e. the shaft 50 and, thus, the gear wheel 46, rotates clockwise in Fig. 1, i.e. in the direction indicated by arrow S. The rotation is transferred either via the third transmission means 36 and the second transmission means 34 to a motion of the strap drum 2 for winding on the strap 4, or via the third transmission means 36 to a motion of the retensioning means 8 for storing of power in the gas-operated springs 62, 64 by their being compressed. The coupling means 10 strives, through its planetary gear design, for equilibrium of moments between the gear wheel 46 and the gear rim 48. Thus, the motion of the first shaft 50 is transferred to that of the second and third transmission means 34, 36 which applies the lowest braking moment to the first transmission means 32. This implies that the strap 4 is first tensioned by the strap drum 2 rotating counterclockwise until the force in the strap 4 is so great that an equilibrium of moments is achieved in the planetary gear.

If the tensioning operation is then continued, the retensioning means 8 will instead be activated. Power is stored in the power-storing means 62, 64 by the chain 60 being driven by the first sprocket 56 such that the gas-operated springs 62, 64 are compressed.

The first transmission shaft 50 is prevented from rotating counterclockwise by a first catch 90, which is biased to engagement with the tooth of the first locking wheel 52. The catch 90 is rotatably arranged in the frame 1.

The strap drum 2 is prevented from rotating clockwise by a second catch 92 which is biased to engagement with the tooth of the second locking wheel 78. The catch 92 is rotatably arranged in the frame 1.

When the strap 4 and the springs 62, 64 are tensioned and the tensioning action is interrupted, the planet carrier 38 with its planet wheels 40, 42 will act as a coupling between the gear wheel 46 and gear rim 48. The springs 62, 64 try to rotate the transmission shaft 54 counterclockwise, seen in Fig. 1. Owing to the catch 90, the gear wheel 46 is prevented from rotating as well.

The planet carrier 38 therefore strives to turn the gear rim 48 counterclockwise via the planet wheels 40, 42 and thereby strives to tension the strap 4.

In order to slacken the strap 4, a releasing device is operated, which comprises a first and a second releasing means 96, 98 and a shaft 94, on which they are jointly arranged. When the shaft 94 is rotated counterclockwise in Fig. 1, the releasing means 96, 98 actuate the catches 90, 92 for releasing the same from the locking wheels 52, 78.

### ALTERNATIVE EMBODIMENTS

The embodiment of the invention described above is an illustrative example only. Many modifications are feasible within the scope of the invention as defined in the claims.

Thus the retensioning means can be provided with some other type of power-storing means, such as helical spring, a screw spring or some other power-storing mechanism which strives to return to the starting position. The solution involving gas-operated springs, however, confers the advantage that the return motion is dampened. It should also be emphasised that two springs are arranged for economical reasons since precisely in this case it is less costly to have two smaller springs than one larger. It goes without saying that it is sufficient to arrange one spring having suitable dimensions. The retensioning means can further be designed in some other fashion and operate according to some principle other than a chain which tensions a spring. However, the solution is advantageous in its simple design, acting directly on the transmission shaft 54.

The coupling means may have a different design, which yields the same basic function, i.e. in one operation the strap is tensioned and the retensioning means is activated, and the retensioning means acts on the strap via the coupling means.

The various parts of the planetary gear can be designed in some other manner while achieving the same function.

## Claims

1. A device for tensioning a fastening (4) which is adapted to hold a load on a vehicle, the device comprising a fastening drum (2) for receiving the fastening, a tensioning means (6) for manual tensioning of the fastening and a mechanical retensioning means (8) for automatically increasing the tension of the fastening, the tensioning means being connected to the retensioning means for activating the same, and the retensioning means comprising a power-storing means (62, 64), in which power is stored during activation and is released automatically for increasing the tension of the fastening, **characterised in that** it further comprises a coupling means (10), that the tensioning means (6) is connected to the retensioning means (8) via the coupling means (10) for effecting said activation, and that both the tensioning means and the retensioning means are connected to the fastening drum (2) via the coupling means for rotating the fastening drum in a tensioning direction, the tensioning motion of the tensioning means being transferred via the coupling means either to the fastening drum or to the retensioning means.

2. A device as claimed in claim 1, **characterised in that** the coupling means (10) comprises a first transmission means (32) connected to the tensioning means (6), a second transmission means (34) connected to the fastening drum (2) and a third transmission means (36) connected to the retensioning means (8), which are mutually arranged in a planetary gear configuration.

3. A device as claimed in claim 2, **characterised in that** a motion of the tensioning means (6) is transferable via the first transmission means (32), the third transmission means (36) and the second transmission means (34) to a motion of the fastening drum (2) and via the first transmission means and the third transmission means to a motion of the retensioning means (8).

4. A device as claimed in claim 2 or 3, **characterised in that** the coupling means (10) comprises a planetary gear, the third transmission means (36) comprising a planet carrier (38) with two opposed planet wheels (40, 42) which are rotatably connected to the planet carrier (38), the first transmission means (32) comprising a gear wheel (46) meshing with the two planet wheels (40, 42) and arranged concentrically thereto, the second transmission means (34) comprising a gear rim (48) meshing with the two planet wheels (40, 42) and arranged concentrically thereto, and a motion of the tensioning means in each moment being transferred to that one of the second and third transferred means which applies the lowest braking moment to the first transmission means.

5. A device as claimed in any one of the preceding claims, **characterised in that** it comprises a releasable locking device (90, 92, 94, 96, 98) which locks the motion of both the tensioning means (6) and the fastening drum (2) in any direction of rotation, the locking device comprising a first catch (90) engaging a first locking wheel (52) associated with the tensioning means, and a second catch (92) engaging a second locking wheel (78) associated with the fastening drum.

6. A device as claimed in claim 5, **characterised in that** the locking device comprises a releasing device having a first and second releasing means (96, 98) and a shaft (94), on which the releasing means are jointly arranged, the releasing device being manually operable for releasing the catches by the releasing means actuating the catches (90, 92) for releasing the same from the locking wheels (52, 78).

7. A device as claimed in any one of the preceding claims, **characterised in that** the power-storing means (62, 64) of the retensioning means (8) consists of at least one gas-operated spring (62 or 64).

8. A device as claimed in claim 7, **characterised in that** the retensioning means (8) comprises a first sprocket (56) connected to the coupling means (10), a second sprocket (58) and a chain (60), which passes over the sprockets and is connected to said at least one gas-operated spring.

## Patentansprüche

1. Vorrichtung für das Spannen einer Befestigung (4), die ausgelegt ist, eine Ladung auf einem Fahrzeug zu halten, und die Vorrichtung umfasst: eine Befestigungstrommel (2) für die Aufnahme der Befestigung, eine Spanneinrichtung (6) für das manuelle Spannen der Befestigung und eine mechanische Nachspanneinrichtung (8) für das automatische Vergrößern der Spannung der Befestigung, wobei die Spanneinrichtung mit der Nachspanneinrichtung für ihre Aktivierung verbunden ist, und die Nachspanneinrichtung eine Kraftspeichereinrichtung (62, 64) umfasst, in der während der Aktivierung Kraft gespeichert wird und für die Vergrößerung der Spannung der Befestigung automatisch freigegeben wird,
**dadurch gekennzeichnet, dass**
sie ferner eine Kopplungseinrichtung (10) umfasst, dass die Spanneinrichtung (6) über die Kopplungseinrichtung (10) mit der Nachspanneinrichtung (8) verbunden ist, um die Aktivierung zu bewirken, und dass sowohl die Spanneinrichtung als auch die Nachspanneinrichtung über die Kopplungseinrichtung mit der Befestigungstrommel (2) verbunden sind für die Drehung der Befestigungstrommel in einer Spannrichtung, wobei die Spannbewegung der Spanneinrichtung über die Kopplungseinrichtung entweder auf die Befestigungstrommel oder auf die Nachspanneinrichtung übertragen wird.

2. Vorrichtung nach Anspruch 1,
**dadurch gekennzeichnet, dass**
die Kopplungseinrichtung (10) umfasst:
- eine erste Übertragungseinrichtung (32), die mit der Spanneinrichtung (6) verbunden ist;
- eine zweite Übertragungseinrichtung (34), die mit der Befestigungstrommel (2) verbunden ist; und
- eine dritte Übertragungseinrichtung (36), die mit der Nachspanneinrichtung (8) verbunden ist; welche gegenseitig in einer Planetengetriebekonfiguration angeordnet sind.

3. Vorrichtung nach Anspruch 2,
**dadurch gekennzeichnet, dass**
eine Bewegung der Spanneinrichtung (6) über die erste Übertragungseinrichtung (32), die dritte Übertragungseinrichtung (36) und die zweite Übertragungseinrichtung (34) auf eine Bewegung der Befestigungstrommel (2) übertragbar ist, und über die erste Übertragungseinrichtung (32) und die dritte Übertragungseinrichtung (36) auf eine Bewegung der Nachspanneinrichtung (8) übertragbar ist.

4. Vorrichtung nach Anspruch 2 oder 3,
**dadurch gekennzeichnet, dass**
die Kopplungseinrichtung (10) ein Planetengetriebe umfasst, die dritte Übertragungseinrichtung (36) einen Planetenträger (38) mit zwei sich gegenüber liegenden Planetenrädern (40, 42) umfasst, die drehbar mit dem Planetenträger (38) verbunden sind, die erste Übertragungseinrichtung (32) ein Zahnrad (46) umfasst, das mit den zwei Planetenrädern (40, 42) im Eingriff steht und zu ihnen konzentrisch angeordnet ist, die zweite Übertragungseinrichtung (34) einen Zahnring (48) umfasst, der mit den zwei Planetenrädern (40, 42) im Eingriff steht und zu ihnen konzentrisch angeordnet ist, und eine Bewegung der Spanneinrichtung in jedem Moment auf eine von der zweiten und der dritten Übertragungseinrichtung übertragen wird, welche das geringste Bremsmoment auf die erste Übertragungseinrichtung wirken läßt.

5. Vorrichtung nach einem der vorangehenden Ansprüche,
**dadurch gekennzeichnet, dass**
sie eine lösbare Verriegelungsvorrichtung (90, 92, 94, 96, 98) umfasst, welche die Bewegung sowohl der Spanneinrichtung (6) als auch der Befestigungstrommel (2) in eine Drehrichtung sperrt, wobei die Verriegelungsvorrichtung eine erste Sperrklinke (90), die in ein erstes Verriegelungsrad (52) eingreift, welches der Spanneinrichtung zugeordnet ist, und eine zweite Sperrklinke (92) umfasst, die in ein zweites Verriegelungsrad (78) eingreift, welches der Befestigungstrommel zugeordnet ist.

6. Vorrichtung nach Anspruch 5,
**dadurch gekennzeichnet, dass**
die Verriegelungsvorrichtung eine Auslösevorrichtung mit einer ersten und einer zweiten Freigabeeinrichtung (96, 98) und einer Achse (94) umfasst, auf der die Freigabeeinrichtungen gemeinsam angeordnet sind, wobei die Auslösevorrichtung manuell bedienbar sind für die Auslösung der Sperrklinken durch die Freigabeeinrichtungen, welche die Sperrklinken (90, 92) ansprechen, für ihre Auslösung von den Verriegelungsrädern (52, 78).

7. Vorrichtung nach einem der vorangehenden Ansprüche,
**dadurch gekennzeichnet, dass**
die Kraftspeichereinrichtungen (62, 64) der Nachspanneinrichtung (8) aus mindestens einer Gas-betriebenen Feder (62 oder 64) besteht.

8. Vorrichtung nach Anspruch 7,
**dadurch gekennzeichnet, dass**
die Nachspanneinrichtung (8) ein erstes; mit der Kopplungseinrichtung (10) verbundenes Kettenzahnrad (56), ein zweites Kettenzahnrad (58) und eine Kette umfasst, welche über die Kettenzahnräder läuft und mit der mindestens einen Gas-betriebenen Feder verbunden ist.

## Revendications

1. Dispositif pour tendre une attache (4) qui est destinée à maintenir une charge sur un véhicule, le dispositif comprenant un tambour d'attache (2) pour recevoir l'attache, des moyens de tension (6) pour tendre manuellement l'attache et des moyens de tension supplémentaire mécaniques (8) pour augmenter automatiquement la tension de l'attache, les moyens de tension étant connectés aux moyens de tension supplémentaire pour les activer, et les moyens de tension supplémentaire comprenant des moyens d'accumulation d'énergie (62, 64) dans lesquels de l'énergie est accumulée pendant l'activation et est libérée automatiquement pour augmenter la tension de l'attache, **caractérisé en ce qu'**il comprend, en outre, des moyens de couplage (10), **en ce que** les moyens de tension (6) sont connectés aux moyens de tension supplémentaire (8) par l'intermédiaire des moyens de couplage (10) pour effectuer ladite activation, et **en ce qu'**à la fois les moyens de tension et les moyens de tension supplémentaire sont connectés au tambour d'attache (2) par l'intermédiaire des moyens de couplage pour faire tourner le tambour d'attache dans un sens de mise en tension, le mouvement de tension des moyens de tension étant transféré par l'intermédiaire des moyens de couplage, ou bien au tambour d'attache ou bien aux moyens de tension supplémentaire.

2. Dispositif selon la revendication 1, **caractérisé en ce que** les moyens de couplage (10) comprennent des premiers moyens de transmission (32) connectés aux moyens de tension (6), des seconds moyens de transmission (34) connectés au tambour d'attache (2) et des troisièmes moyens de transmission (36) connectés aux moyens de tension supplémentaire (8), qui sont mutuellement agencés dans une configuration d'engrenage planétaire.

3. Dispositif selon la revendication 2, **caractérisé en ce qu'**un mouvement des moyens de tension (6) est transférable par l'intermédiaire des premiers moyens de transmission (32), des troisièmes moyens de transmission (36) et des seconds moyens de transmission (34) en un mouvement du tambour d'attache (2) et par l'intermédiaire des premiers moyens de transmission et des troisièmes moyens de transmission en un mouvement des moyens de tension supplémentaire (8).

4. Dispositif selon la revendication 2 ou 3, **caractérisé en ce que** les moyens de couplage (10) comprennent un engrenage planétaire, les troisièmes moyens de transmission (36) comprenant un porte-satellites (38) avec deux satellites opposés (40, 42) qui sont reliés, libres en rotation au porte-satellites (38), les premiers moyens de transmission (32) comprenant une roue dentée (46) engrenant avec les deux satellites (40, 42) et positionnée concentriquement par rapport à ceux-ci, les seconds moyens de transmission (34) comprenant une couronne dentée (48) engrenant avec les deux satellites (40, 42) et positionnée concentriquement par rapport à ceux-ci, et un mouvement des moyens de tension étant transféré à chaque instant à ceux des seconds et troisièmes moyens de transmission qui appliquent le plus faible moment de freinage aux premiers moyens de transmission.

5. Dispositif selon l'une quelconque des revendications précédentes, **caractérisé en ce qu'**il comprend un dispositif de blocage réversible (90, 92, 94, 96, 98) qui bloque à la fois le mouvement des moyens de tension (6) et celui du tambour d'attache (2) dans n'importe quel sens de rotation, le dispositif de blocage comprenant un premier cliquet (90) venant en prise avec une première roue de blocage (52) associée aux moyens de tension, et un second cliquet (92) venant en prise avec une seconde roue de blocage (78) associée au tambour d'attache.

6. Dispositif selon la revendication 5, **caractérisé en ce que** le dispositif de blocage comprend un dispositif de libération ayant des premiers et seconds moyens de libération (96, 98) et un arbre (94), sur lequel les moyens de libération sont agencés conjointement, le dispositif de libération étant actionnable manuellement pour libérer les cliquets par le biais des moyens de libération agissant sur les cliquets (90, 92) pour les libérer des roues de blocage (52, 78).

7. Dispositif selon l'une quelconque des revendications précédentes, **caractérisé en ce que** les moyens d'accumulation d'énergie (62, 64) des moyens de tension supplémentaire (8) consistent en au moins un ressort actionné par gaz (62 ou 64).

8. Dispositif selon la revendication 7, **caractérisé en ce que** les moyens de tension supplémentaire (8) comprennent un premier pignon (56) connecté aux moyens de couplage (10), un second pignon (58) et une chaîne (60), qui passe sur les pignons et est connectée audit au moins un ressort actionné par gaz.
